# EUROPEAN PATENT SPECIFICATION

(11) **EP 1 855 825 B1**
(45) Date of publication and mention of the grant of the patent: **15.02.2017**
(21) Application number: 06711395.1
(22) Date of filing: 25.01.2006
(51) Int. Cl.: B22D 17/26, B29C 45/67

(54) **IMPROVEMENT TO A DIE-CASTING MACHINE**
VERBESSERUNG AN EINER DRUCKGIESSMASCHINE
AMELIORATION D'UNE MACHINE A COULER SOUS PRESSION

(30) Priority: 07.02.2005 IT BS20050015
(43) Date of publication of application: 21.11.2007
(73) Proprietor: ITALPRESSE INDUSTRIE S.r.l. - SOCIETA' UNIPERSONALE, 25020 Capriano Del Colle (BS) (IT)
(72) Inventor: ALBERTINI, Federico, ITALPRESSE INDUSTRIE S.p.A, 25020 Capriano Del Colle (Brescia) (IT)
(74) Representative: Pulieri, Gianluca Antonio
(86) International application number: PCT/IT2006/000041
(87) International publication number: WO 2006/082608

(56) References cited:
- US-A- 3 465 387

## Description

### Field of Invention

This invention concerns horizontal die-casting machines and refers in particular to a die-casting machine with an improved closing and clamping device.

### State of the technique

Some machines for die-casting metal parts usually comprise a bed and on said bed a first vertical fixed plate, a second vertical fixed plate at a distance from the first and a moving vertical plate between the fixed plates which moves horizontally.

Horizontal columns rigidly join the two vertical fixed plates, whereas the intermediate moving plate is guided on the bed and slides along the horizontal columns to move towards and away from the first fixed plate.

The facing sides of the first fixed plate and the moving plate hold a mould made up of two complementary parts forming the cavity of the item to be die cast. One part of the mould is stationary, fixed to the first fixed vertical plate; the other part of the mould is fixed and moves with the moving plate to close and open the mould.

The bed, working in association with the external face of the first fixed plate, supports an injection unit to deliver the melted metal into the mould when the latter is closed.

The movements of the intermediate plate with the relative part of the mould can be achieved by at least one hydraulic cylinder. However, when it is in the forward, mould closed position, the moving plate must also be clamped to ensure that the mould remains closed in opposition to the thrust of the melted material that is injected into it.

In die-casting machines this clamping operation is usually achieved using a toggle system positioned between the moving plate and either the second fixed vertical plate or another stationary reaction element. However, such a toggle system, even if functional, is relatively complex and cumbersome, also influencing the complexity and overall dimensions of the machine. Furthermore its closing and clamping force is exercised principally in an intermediate zone of the moving plate and consequently of the mould, but not uniformly also around the peripheral zone of the mould, thus allowing the possibility of leaks at the highest injection pressure of the melted metal.

In truth, in another field of application that is, in injection moulding of plastic materials, horizontal presses have been proposed with a structure similar to that of die-casting machines, that is with fixed plates connected by horizontal columns and a moving plate holding the forming mould with one of the fixed plates, but where clamping in the closing position of the moving plate and consequently the mould is achieved by jaws gripping the horizontal columns externally just to the rear of the moving plate.

As far as is known, a technological solution of this kind has never been proposed neither applied to die-casting machines.

Document US 3,465,387 discloses an injection molding machine having a first platen mounted to the base of the machine and a second platen slidable on the base and comprising a plurality of tie rods mounted on the first platen, and a retraction mechanism provided for withdrawing and extending the tie rods relative to the mold area. A drive system for driving the second platen includes long travel driving means used to move the second platen and to arrest and cushion it as it stops; a clamping pad for each tie rod having self-centering, fast acting breech couplings for connecting and disconnecting, and a hydraulic load cell, having a movable member on which the breech mechanism is mounted, for applying the final clamping force to the mold; a hydraulic push-back cylinder aids separation of the first and second platens during initial opening of the mold and aids deceleration of the second platen as the platens approach the closed positions.

### Objective and Summary of the Invention

It is therefore the objective of this invention to propose and manufacture a horizontal die-casting machine in which the more usual toggle closing system is eliminated and replaced by thrust and clamping means directly associated with the horizontal guide columns and moving plate supporting one part of the closable mould which can close against another matching part of the mould supported by a fixed plate.

In this configuration the die-casting machine has the advantages of being simpler and open and where there is the possibility even of eliminating the second fixed plate, leaving the fixed plate and the mobile plate holding the half moulds. Furthermore the machine is easier to access for maintenance and, powers being equal, it can be less cumbersome due to the elimination of the toggle closing mechanism and, if required, the second fixed plate. Above all, the system allows a more efficient closing of the mould, uniform in all its parts, even along its periphery where closing and sealing always seem problematic.

In agreement with the invention, such an objective and the aforementioned advantages are achieved in a machine for die casting according to the characterising part of claim 1 of the appendix.

### Brief description of the Drawings

More details will however become evident from the following description made in reference to the enclosed indicative and not limiting drawings, in which:

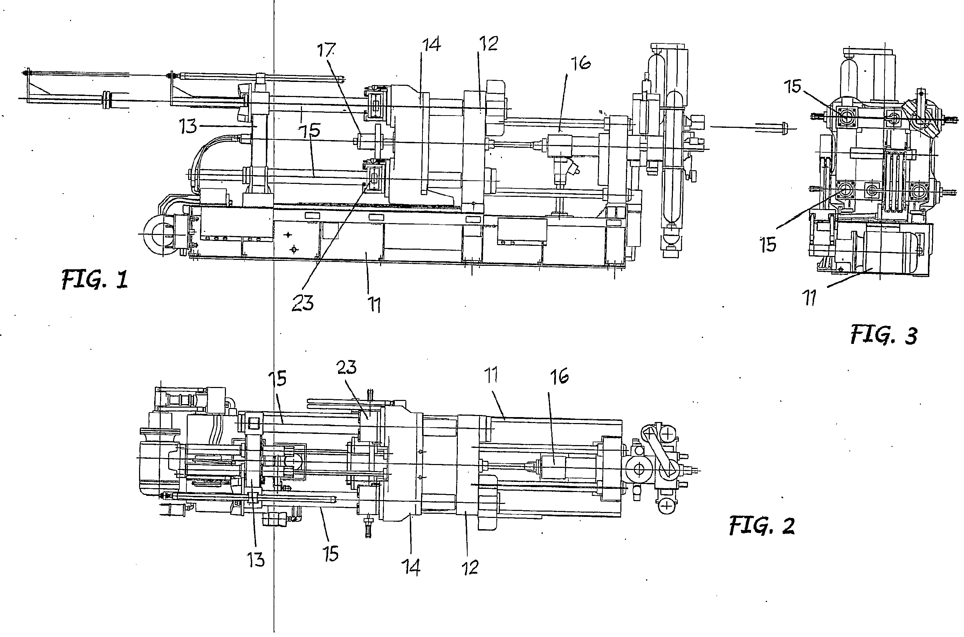

Fig. 1 shows a schematic side view of an example of a die casting machine according to the invention;
Fig. 2 shows a view from above of the machine in Fig. 1;
Fig. 3 shows an end on view;

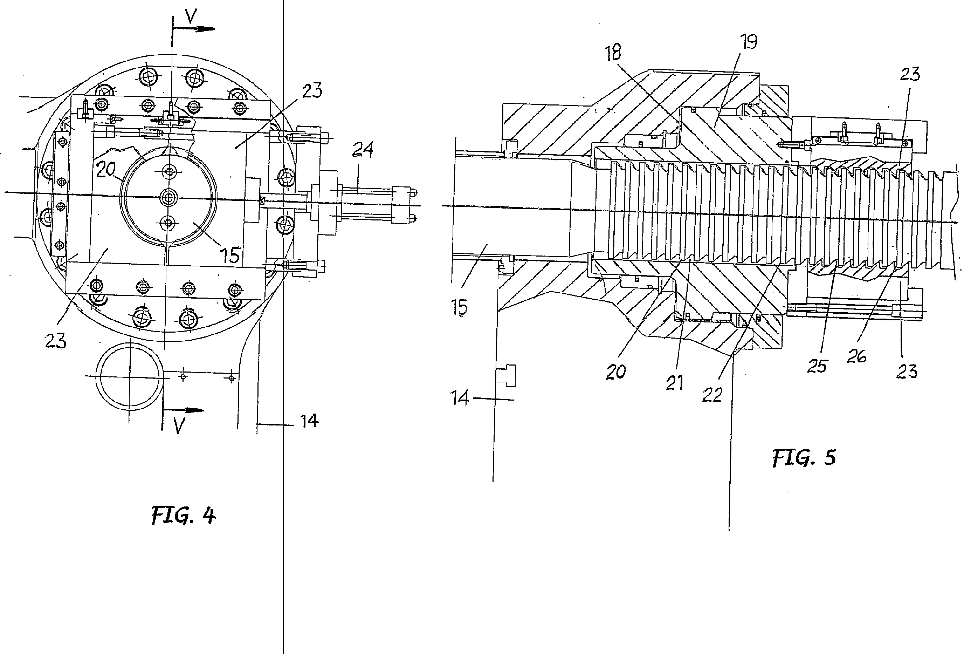

Fig. 4 shows, in an enlarged cross section, the clamping means associated with a guide column of the moving plate; and
Fig. 5 shows a cross section according to arrows V-V in Fig. 4

### Detailed Description of the Invention

In the example given, the die casting machine comprises a bed 11 from which a first fixed plate 12, and a second fixed plate 13 extend upwards, the latter at a distance from the first, and a moving plate 14 positioned and moving horizontally between the fixed plates.

These two fixed plates 12, 13 are connected rigidly to each other by horizontal columns 15 positioned according to the sides of a four-sided figure, and the moving plate 14 is guided on the bed 11 and along the columns 15 which cross it. The first fixed plate 12 and the moving plate 14 hold the two matching parts of a forming mould not shown which are opened and closed in response to the movements of the moving plate either away from or towards the first fixed plate, respectively.

The bed also supports an injection unit 16 placed external to the first fixed plate 12 and used to inject the melted metal into the mould when the latter is closed.

At least one hydraulic actuator 17 can be associated with the moving plate 14 for its fast movements finalised at opening and closing the mould.

Now, according to the invention, in the face of the moving plate 14 opposite the one holding the respective part of the mould, there is, around each column 15, a chamber 18, which is fed by a fluid under pressure like a hydraulic cylinder and which houses a piston 19 positioned around the column itself.

Furthermore, on a length of each column 15, such length corresponding to at least the stroke of the moving plate 14 required to open and close the mould, are machined a number of parallel annular teeth 20 protruding radially, defined by a series of grooves 21. The bottoms of these grooves are preferably sloping towards the axis of the same column in the direction of the movement of the moving plate to open the mould, so that each tooth 20 defines a radial shoulder 22 facing towards the moving plate, that is to say, on the contrary, in the opposite direction to the one for opening the mould.

A pair of opposed clamping jaws 23 is fixed behind piston 19,which follow the axial movements of the piston and which move radially, towards and away from the respective column 15, in a clamping and releasing position, i.e. by means of a hydraulic control cylinder 24.

These jaws each have internal teeth 25 to engage with the annular teeth 20 around column 15 when they mate. The internal teeth 25 of the jaws are shaped so as to present a radial side 26 made to rest against the radial shoulder 22 of the annular teeth of said column.

Basically, when the moving plate is moved forward and backwards the jaws 23 remain in the clamped position and the piston 19 is inactive.

When the moving plate is moved forward in the closed position of the mould so that the machine can be used, the pair of clamping jaws 23 associated with the moving plate are driven and moved towards their respective column to engage their teeth 20. Then the pistons 19, also associated with the moving plate and positioned around the columns, are activated so as to close tightly and hold the mould in the closed position, finding opposition from the teeth of the jaws engaged with those of the columns against the thrust from the injection of the melted metal into the mould.

For the successive opening of the mould, simply deactivate the pistons 19, then retract the jaws 23 in the clamped position and move the moving plate backwards using the relative hydraulic actuator.

Lastly it should be noted that the same mould clamping system when closing it is also applicable for die casting machines with only two vertical plates: one fixed plate and one moving plate joined by means of guide columns and holding the two matching parts of a mould.

## Claims

1. A die casting machine comprising a bed (11), and a first fixed plate (12) extending upwards from it, and a moving plate (14) guided on the bed (11) and moving horizontally to the first fixed plate (12),
wherein the first fixed plate (12) holds some horizontal columns (15) which cross the moving plate (14), the first fixed plate (12) and the moving plate (14) hold two parts of a shaping mould which open and close each with regards to the other in response to the movements of the moving plate (14) away from and towards the first fixed plate (12), and on an external face of said first fixed plate (12) is positioned an injection unit (16) of melted metal into the mould when it is closed,
and wherein hydraulic axial thrust devices (18,19) and mechanical radial clamping devices (23) are placed around each of said horizontal columns (15) and are associated with the moving plate (14) and used to position and tightly clamp said moving plate (14) in the mould closed position said machine being **characterized in that**
in said moving plate (14) and around each horizontal column (15) is provided a chamber (18) suitable to be fed by a fluid under pressure and housing a piston (19) also placed around the column and acting so as to move the moving plate (14) axially between a closing and opening position of the mould.

2. A die casting machine according to claim 1, wherein on a length of each horizontal column (15) a number of parallel, radially protruding, annular teeth (20) are provided and wherein a pair of opposed clamping jaws (23) are provided, said jaws being fixed to the rear of each piston (19), associated with, the moving plate and moveable radially towards and away from the respective column (15), in a clamping and releasing position with the annular teeth (20) of the former.

3. A die casting machine according to claim 2, wherein the annular teeth of each column are determined by a series of grooves (21), wherein the bottoms of these grooves are sloping towards the axis of the same column in the direction of the movement of the moving plate to open the mould, so that each annular tooth (20) forms a radial shoulder (22) in the opposite direction to the one for opening the mould, and wherein each clamping jaw (23) has internal teeth (25) provided with a radial side made to rest against the radial shoulder (22) of the annular teeth (20) of said column (15) when the clamping jaws (23) are in the clamping position.

4. A die casting machine according to any one of the preceding claims, comprising a second fixed plate (13) at a distance from the first fixed plate (15).

## Patentansprüche

1. Druckgießmaschine umfassend ein Bett (11) sowie eine sich von diesem nach oben erstreckende erste feste Platte (12) und eine auf dem Maschinenbett (11) geführte und sich horizontal zur ersten festen Platte (12) bewegende bewegliche Platte (14),
wobei die erste feste Platte (12) diverse horizontale Säulen (15) hält, welche durch die bewegliche Platte (14) verlaufen, wobei die erste feste Platte (12) und die bewegliche Platte (14) zwei Teile einer Gießform halten, die sich jeweils in Bezug auf den anderen Teil öffnen und schließen, als Antwort auf die Bewegungen der beweglichen Platte (14) weg von und hin zu der ersten festen Platte (12), und wobei auf einer Außenseite der ersten festen Platte (12) eine Einheit (16) zum Einspritzen von geschmolzenem Metall in die Form, wenn diese geschlossen ist, positioniert ist,
und wobei hydraulische Axialschubvorrichtungen (18, 19) und mechanische radiale Klemmvorrichtungen (23) um jede der horizontalen Säulen (15) herum platziert und mit der beweglichen Platte (14) verbunden sind und dazu dienen, die bewegliche Platte (14) in der Formschließposition zu positionieren und festzuklemmen,
wobei die Maschine **dadurch gekennzeichnet ist, dass**
in der beweglichen Platte (14) und um jede horizontale Säule (15) eine Kammer (18) vorgesehen ist, die dazu geeignet ist, mit einem unter Druck stehenden Fluid gefüllt/beschickt zu werden, und die einen Kolben (19) aufnimmt, der ebenfalls um die Säule platziert ist und so wirkt, dass die bewegliche Platte (14) axial zwischen einer geschlossenen und einer geöffneten Position der Form bewegt wird.

2. Druckgießmaschine nach Anspruch 1, wobei auf einer Länge jeder horizontalen Säule (15) eine Anzahl paralleler, radial vorspringender, ringförmiger Zähne (20) vorgesehen ist und wobei ein Paar entgegengesetzter Klemmbacken (23) vorgesehen ist, wobei diese Backen rückseitig an jedem Kolben (19), der mit der beweglichen Platte verbunden und radial zur und weg von der jeweiligen Säule (15) bewegbar ist, mit den ringförmigen Zähnen (20) der Ersteren in einer Klemm- und Löseposition stehend befestigt sind.

3. Druckgießmaschine nach Anspruch 2, wobei die ringförmigen Zähne jeder Säule durch eine Reihe von Nuten (21) festgelegt sind, wobei die Nuten dieser Einkerbungen gegenüber der Achse derselben Säule in Bewegungsrichtung der beweglichen Platte zum Öffnen der Form geneigt sind, sodass jeder ringförmige Zahn (20) eine radiale Schulter (22) in der entgegengesetzten Richtung zu der zum Öffnen der Form bildet, und wobei jede Klemmbacke (23) interne Zähne (25) aufweist, die mit einer radialen Seitenfläche versehen sind, die so ausgelegt ist, dass sie an der radialen Schulter (22) der ringförmigen Zähne (20) der Säule (15) anliegt, wenn sich die Klemmbacken (23) in der Klemmposition befinden.

4. Druckgießmaschine nach einem der vorstehenden Ansprüche, umfassend eine zweite feste Platte (13) in einem gewissen Abstand zur ersten festen Platte (15).

## Revendications

1. Machine à couler sous pression comprenant un lit (11), et une première plaque fixe (12) s'étendant vers le haut depuis celui-ci, et une plaque mobile (14) guidée sur le lit (11) et se déplaçant horizontalement jusqu'à la première plaque fixe (12),
dans laquelle la première plaque fixe (12) maintient des colonnes horizontales (15) qui traversent la plaque mobile (14), la première plaque fixe (12) et la plaque mobile (14) maintiennent deux parties d'un moule de forme qui s'ouvrent et se ferment l'une par rapport à l'autre en réponse aux mouvements de la plaque mobile (14) depuis et vers la première plaque fixe (12), et sur une face externe de ladite première plaque fixe (12) est positionnée une unité d'injection (16) de métal fondu dans le moule quand il est fermé,
et dans laquelle des dispositifs hydrauliques de poussée axiale (18, 19) et des dispositifs mécaniques de serrage radial (23) sont placés autour de chacune desdites colonnes horizontales (15) et sont associés à la plaque mobile (14) et utilisés pour positionner et fixer fermement ladite plaque mobile (14) dans la position fermée du moule, ladite machine étant **caractérisée en ce que**
dans ladite plaque mobile (14) et autour de chaque colonne horizontale (15) est disposée une chambre (18) adaptée pour être alimentée par un fluide sous pression et logeant un piston (19) également placé autour de la colonne et agissant de façon à déplacer la plaque mobile (14) axialement entre une position de fermeture et d'ouverture du moule.

2. Machine à couler sous pression selon la revendication 1, dans laquelle sur une longueur de chaque colonne horizontale (15) un certain nombre de dents annulaires (20), en saillie radiale, parallèles sont disposées et dans laquelle une paire de mâchoires de serrage opposées (23) sont fournies, lesdites mâchoires étant fixées à l'arrière de chaque piston (19), associées avec la plaque mobile et mobiles de façon radiale vers et depuis la colonne (15), respective dans une position de serrage et de libération avec les dents annulaires (20) de cette première.

3. Machine à couler sous pression selon la revendication 2, dans laquelle les dents annulaires de chaque colonne sont déterminées par une série de rainures (21), dans laquelle les fonds de ces rainures sont inclinés vers l'axe de cette même colonne dans la direction du mouvement de la plaque mobile pour ouvrir le moule, de sorte que chaque dent annulaire (20) forme un épaulement radial (22) dans la direction opposée à celle pour ouvrir le moule, et dans laquelle chaque mâchoire de serrage (23) a des dents internes (25) fournies avec un côté radial amené à reposer contre l'épaulement radial (22) des dents annulaires (20) de ladite colonne (15) quand les mâchoires de serrage (23) sont dans la position de serrage.

4. Machine à couler sous pression selon l'une quelconque des revendications précédentes, comprenant une seconde plaque fixe (13) à une certaine distance de la première plaque fixe (12).
